# EUROPEAN PATENT APPLICATION

(11) **EP 2 138 749 A2**
(43) Date of publication of application: **30.12.2009**
(21) Application number: 09163334.7
(22) Date of filing: 22.06.2009
(51) Int. Cl.: F16L 27/11

(54) **Method for carrying out a joint and joint so obtained**

(30) Priority: 23.06.2008 IT BO20080400
(71) Applicant: Aleardi, Romano, 36075 Montecchio Maggiore (VI) (IT)
(72) Inventor: Aleardi, Romano, 36075 Montecchio Maggiore (IT)
(74) Representative: Negrini, Elena

(57) **Abstract**

A method for carrying out a joint (10) having at least one tube (20) includes the making of at least one or more waving portion (13) by means of hydroshaping and subsequent heat treatment of thermoelectric induction type.

A joint having a tube (20), whose free ends are provided with hooking means (30), comprises a portion (13) shaped with waves (23).

## Description

The present invention relates to connection elements for connecting components within boilers, conditioning systems, solar panels, or generally fittings in which its necessary to connect in an rigid way two or more working groups ensuring the hermetic seal. In particular the invention refers to a method for the production of a joint and joint so obtained, for example the connection between a pump and a heat exchanger within a wall boiler in which water circulates at low-pressure.

The known connections used in the wall boilers are essentially made by a couple of copper rectilinear sleeves joined by a folded tubular element, so-called elbow, that is welded at each sleeve end in such a way to form a folded joint with prearranged angle.

It is also possible to carry out more bendings simply interposing, by means of welding, corresponding bent tubular elements among rectilinear sleeves. Such angles in the connections can also be made by means of bending machines of rectilinear sleeves.

Such fixed angled connections, both welded and made by bending, have, at their free ends, suitable circular seats for containing at least one O-ring fit to carry out the seal against the inner wall of the inlet of the duct to be joined.

The main disadvantage of the fixed angled connections is that they need works and controls of their production for ensuring an easy use.

Another disadvantage sometimes resides in the difficult adaptability of the folded joint to the different misalignments among ducts to be connected by means of the specific folded joint.

A further disadvantage is that the misaligning between the joined ducts often causes a misaligning between the axis of the ducts and the axis of the rectilinear sleeve of the joint causing the incorrect seal of the O-ring and therefore of the whole folded joint.

Another disadvantage of the connections made with the known connections is that the connection faultiness is verified only after the boiler final assembly and precisely only during operation in which the vibrations due to water circulation, cause leakage loss of the pipes so joined with consequent water leakage and consequent dismounting of the whole boiler.

An object of this invention is to propose a method for making folded joint and a joint so obtained suitable to perfectly fit to the possible misalignments between the ducts to be joined without invalidating minimally the O-ring tightness.

Further object to make an easy joint in an economical way, which has high flexibility necessary to be opportunely shaped with the desired bendings.

Another object is to propose a single joint from which connections with any desired bendings and also directly bendable in correspondence of the use can be made.

A further object is to propose a joint which can be easily shaped and extendible when making the joined pipes and to be shaped again when at least one of the elements joined by means of the same joint is changed.

Another object is to propose a joint manually bendable by the user with reduced efforts and without needing further bending equipment.

The characteristics of the invention are in the followed evidenced with particular reference to the joined drawings in which:
- figures 1 and 2 show partially sectioned view of known bent joints coupled with the joinable pipes;
- figure 3 shows a front view of a joint object of the present invention;
- figures 4 and 5 show partially sectioned and enlarged views of the joint of the invention in corresponding operating phases of the method for its making;
- figure 6 shows a partially sectioned view of the joint of figure 3 in a possible application;
- figure 7 shows a front view of a variant of the sleeve of figure 3.

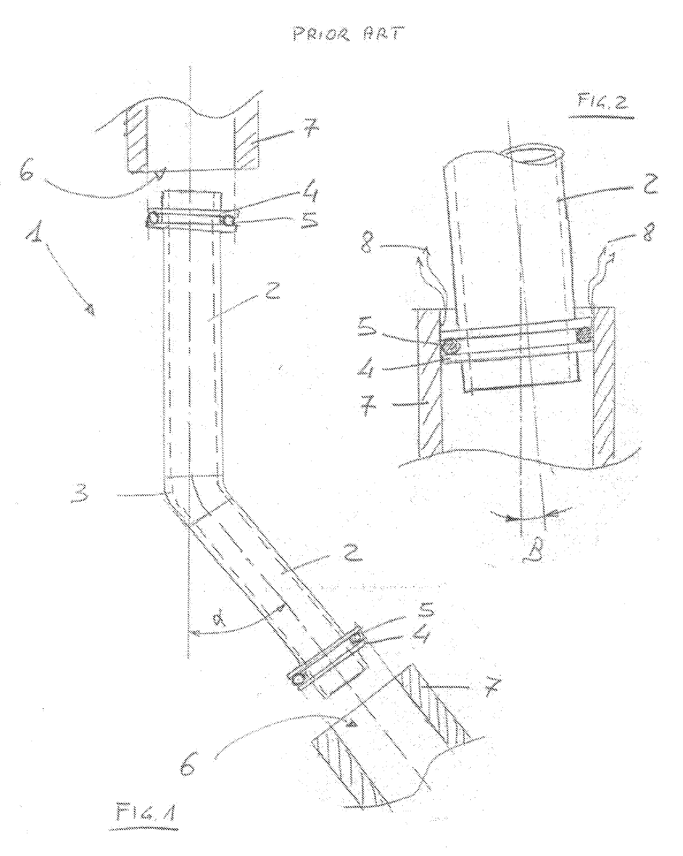

With reference to figures 1 and 2 showing the tubes of the prior art, numeral 1 indicates the joint having two rectilinear tubes 2 having the same diameter and joined by a hollow tubular element 3 having diameter identical to the tubes 2 and having the ends welded to an end of each tube 2. The angle α between the longitudinal axes of the tubes 2 determines the inclination of the joint.

Near each remaining free end of the tubes 2 an annular seat 4 s fixed suitable to house a sealing element 5, for example an O-ring, intended to carry out the seal when is inserted into the mouth 6 of a duct 7 to be joined, for example the duct outlet of a pump or the inlet of a heat exchanger or vice-versa. This seal is made by the O-ring 5 by adhesion to the internal walls of the duct 7 near the inlet mouth 6.

In figure 2, the angle β identifies the inclination between the longitudinal axes of one of the tubes 2 and of the duct 7: so much greater is this inclination so much greater will be the seal difficulty of the O-ring 5 onto the inside wall of the duct 7 and so much greater can therefore be the sealing loss and the output of liquid 8 from the pipes so made by means of the fixed bending known connections.

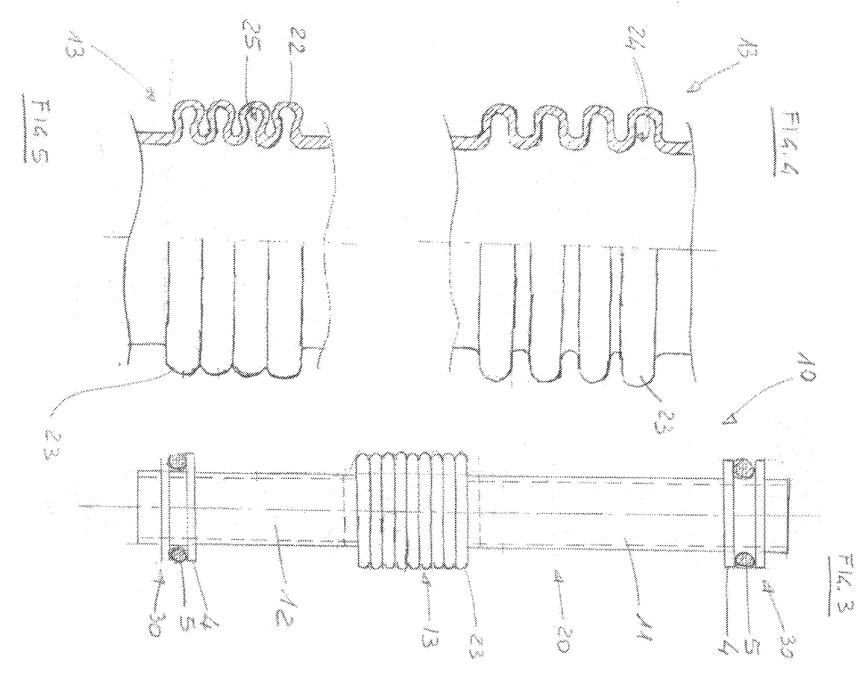

Making now reference to figures 3-6, numeral 10 indicates a joint object of the invention and numeral 20 indicates a tube having hooking means 30 at its free ends including an annular seat 4 suitable to house one or more sealing members 5 of the O-ring type.

In an almost central portion 13 of the tube 20, a series of ring waves 23 is made each having a section almost "U" shaped 24 (see figure 4). In figure 5 the ring waves 23 are compacted and have omega shape with a crest 22.

That series of ring waves 23 divide the tube 20 into two almost rectilinear portions 11 and 12.

The portion 13 of the wave 23 has a diameter greater with respect to the diameter of the tube 20, and a lower thickness with respect to the thickness of the latter.

The portion 13 of the waves 23 and a portion adjacent thereto, at least of the length of a ring wave 23, have been submitted to heat treatment by thermoelectric induction means.

The ring waves 23 are made raised with respect to the outer wall of the tube 20 and are placed on levels almost perpendicular to the longitudinal axis of the same tube.

The use of the joint 10 provide that it can be bent, until a maximum of 180°, around the portion of ring waves 23 in such a way that the end of the portions 11 and 12 having the connecting means 30 may be inserted into the respective duct 7 to be joined through their inlet mouths 6 and with longitudinal axis almost coinciding with the longitudinal axis of the ducts 7 in such a way to carry out a fixed joint 10 without pushes or undesirable tractions.

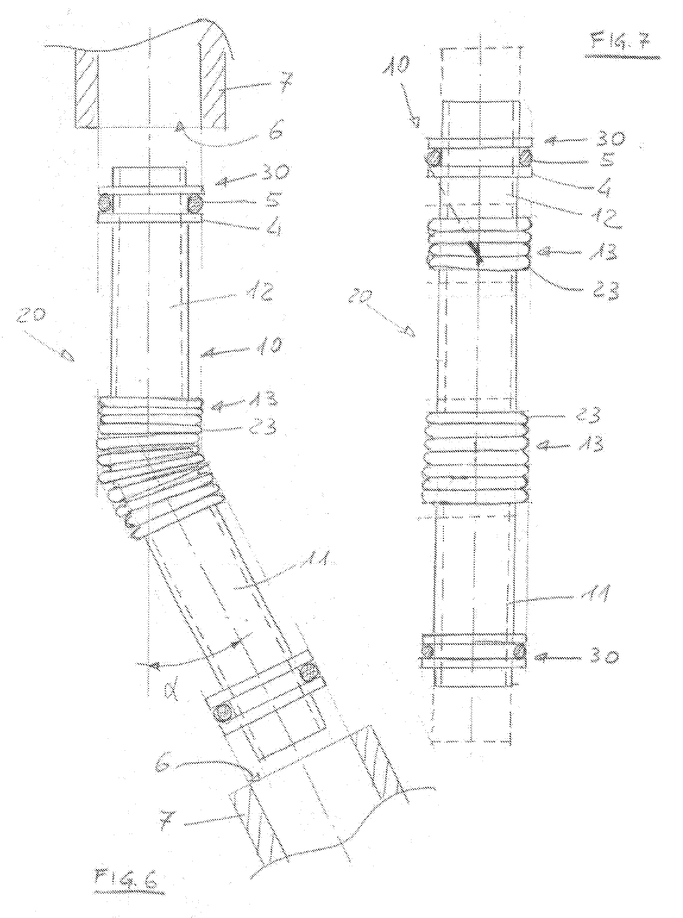

Figure 7 shows a variant of the preferred embodiment in which the shaped portions 13 having the waves 23 are two in such a way to allow the joint 10 of being bent also transversely as regards to a first bending.

It is appropriate to observe that the tube 20 is preferably made of copper and the undulated portions 23 are integrally obtained from the same tube without addition of welded portions or mechanically linked.

The method for the production of the joint 10 mainly includes:
- to make in the portion 13 of the tube 20 of a series of ring waves 23 by hydroshaping with consequent formation of U-like shape waves, protruding from the external surface of the tube 20, and having lower thickness with respect to the thickness of the same tube;
- to compact axially of the ring waves 23 in such a way to reduce the waves with the shape of omega;
- to treat thermally the portion 13 with thermoelectric induction.

The method includes moreover that the heat treatment is made also on a portion of tube 20 adjacent to the ring waves 23 for the length of about a ring wave 23.

The method provides furthermore the folding of the joint 10 in correspondence of the series of waives 23, after the heat treatment, of an angle α between longitudinal axes of the portions 11 and 12 and optionally variable between 0 and 180°.

The production method of the joint 10 provides that the series of waves 23 is made on levels almost perpendicular to the longitudinal axis of the tube 20.

It is advantageous to observe that the compacting phase of the undulated portion 23 confers the maximum flexibility to the joint 10 in correspondence of the undulated portion 23.

The heat treatment phase with electrothermal induction, instead, is such as to confer the maximum malleability to the joint 10 that can be easily elongated, shortened and bent, leaving unaltered the original mechanical characteristics of the two tube portion 20 having hooking means 20 at the free ends.

The characteristic of wide malleability and flexibility conferred to the joint 10 is associated to the absence of elastic flows, therefore when the joint is flexed or elongated or subjected to both actions and when the hooking means 30 are inserted into the related ducts 7 to be joined, and the respective O-ring 5 are placed according to the optimal connecting axis and the joint 10 does not exercises pushes or undesirable additional tractions.

The joint 10 by virtue of the ring waves 23 is able to adsorb repeated vibrations both dynamic and thermodynamic, as well as to allow the connection between two or more elements placed each other in a way a bit precise and whose positioning repeating is not constant.

An advantage of this invention is to supply a method for the production of a joint foldable to settle perfectly to the possible misalignments between the ducts to be joined without invalidating minimally the seal of the O-ring and therefore of the whole so joined pipe.

A further advantage is to supply a joint made easily in an economical way and having high flexibility necessary to be opportunely shaped to the desired bendings.

Other advantage is to supply a joint for making desired bendings starting from a single rectilinear joint, avoiding therefore the need to have always different prearranged bending connections.

Another advantage is to supply a joint easily shapeable and extendible when making the joined pipes and fit to be shaped again at the replacement of at least one of the elements connected by the same joint.

Another advantage consists in supplying a joint that is either manually pliable by the user with strongly reduced efforts and without needing of further bending equipment.

## Claims

1. Method for carrying out a joint (10) having at least one tube (20) **characterized by** including:
- the making of at least one wave (23) by shaping of at least one portion (13) of the at least one tube (20);
- the heat treatment of at least said one portion (13).

2. Method according to claim 1 **characterized in that** the shaping is obtained with hydroshaping.

3. Method according to claim 1 **characterized in that** the heat treatment is of thermoelectric induction type.

4. Method according to claim 1 **characterized in that** before the heat treatment of the portion (13) and after the shaping of the portion (13) the compacting is made of the wave (23).

5. Method according to claim 1 **characterized in that** the heat treatment is also made on at least one portion of tube (20) adjacent to the wave (23).

6. Method according to any of the previous claims **characterized by** providing after the heat treatment the folding of the at least one wave (23).

7. Method according to claim 6 **characterized in that** the folding is at maximum of 180°.

8. Method according to any of the previous claims **characterized in that** the wave (23) is made almost annular and raised with respect to the outer wall of the tube (20) and lies at levels almost perpendicular to the longitudinal axis of the tube (20).

9. Joint having at least one tube (20) whose free ends are provided with the hooking means (30) **characterized in that** the tube (20) comprises at least one portion (13) shaped with at least one wave (23).

10. Joint according to claim 9 **characterized in that** the portion (13) provides at least one plurality of waves (23) dividing the tube (20) in at least two almost rectilinear portions (11, 12).

11. Joint according to claim 9 **characterized in that** the joint (20) is pliable at maximum of 180° in correspondence of the at least one wave (23).

12. Joint according to claim 9 **characterized in that** the hooking means (30) include an annular seat (4) suitable to house at least one sealing element (5).

13. Joint according to claim 9 **characterized in that** the wave (23) and a portion adjacent thereto have been subjected to heat treatment.

14. Joint according to claim 9 **characterized in that** the portion (13) of the wave (23) has a diameter greater with respect to the diameter of the tube (20).

15. Joint according to claim 9 **characterized in that** the portion (13) of the wave (23) has a lower thickness with respect to the thickness of the tube (20).
